# EUROPEAN PATENT SPECIFICATION

(11) **EP 4 279 812 B1**
(45) Date of publication and mention of the grant of the patent: **13.08.2025**
(21) Application number: 22425022.5
(22) Date of filing: 18.05.2022
(51) Int. Cl.: F23R 3/28

(54) **FUEL OIL INJECTOR WITH SHIELDING AIR SUPPLY**
TREIBÖLEINSPRITZDÜSE MIT ABSCHIRMLUFTZUFUHR
INJECTEUR D'HUILE DE CARBURANT AVEC ALIMENTATION EN AIR DE PROTECTION

(43) Date of publication of application: 22.11.2023
(73) Proprietor: Ansaldo Energia Switzerland AG, 5400 Baden (CH); ANSALDO ENERGIA S.p.A., 16152 Genova (IT)
(72) Inventor: Maurer, Michael Thomas, 79713 BAD SÄCKINGEN (DE); Bertolotto, Edoardo, 16152 GENOVA (IT); Konradt, Oliver, 79761 WALDSHUT-TIENGEN (DE)
(74) Representative: Studio Torta S.p.A.

(56) References cited:
- EP-A1- 3 078 913
- EP-A1- 3 137 815
- US-A1- 2006 080 966
- US-A1- 2013 125 554
- US-A1- 2014 060 071
- US-A1- 2014 123 668
- US-A1- 2017 211 805

## Description

### TECHNICAL FIELD

The present invention relates to a fuel oil injector with shielding air supply.

### BACKGROUND

As is known, operating heavy-duty gas turbine engines on different fuels is quite common and machines accepting both gas (even several types) and fuel oil. Both regulatory authorities and market are imposing increasingly strict requirements on pollutant emissions, efficiency and response, that involve nearly all operating conditions and especially aspects of operating on fuel oil. These requirements may be more easily met when gas turbine engines can be started on gas and switched to fuel oil only when higher load conditions have been reached.

More and more often, however, gas turbine engines are required to run on fuel oil at any load condition, including low load and even start-up, besides base load. Not only increase of firing temperature is sought to improve efficiency at high load, but also compliant operation at low load in therefore expected. For example, gas turbine engines running exclusively on fuel oil are frequently used as back-up systems for renewable energy market. As intervention of the back-up systems is quite rare, a relatively limited stock of fuel oil is sufficient to avoid discontinuing service and no connection to gas supply is provided, as it would be unnecessarily costly.

Fuel oil feed is accomplished through lance injector, which however are normally designed for high load and may not prove satisfactory at low load conditions. Therefore, also fuel oil injection has to be carefully designed with a twofold view of optimizing performance and avoiding coking buildup, which may reduce efficiency and even component lifetime.

Known solutions include lance injectors with concentric feed lines and nozzles dedicated to delivery of fuel oil, water and sometimes fuel gas and/or shielding air, possibly. The innermost line is normally dedicated to the supply (and return, if the case be) of fuel oil, which is delivered through injection nozzles to form a hollow cone and improve combustion. Water may be sprayed around the fuel oil cone, generally for the purpose of cutting NOx emissions. Shielding air, if present, is injected in parallel flow with the fuel oil and surrounds the water layer. Shielding air thus forms a protective cold layer that delays heating up of the fuel oil and slows down reaction kinetics. In addition, shielding air may help purge away fuel oil droplets close to the fuel oil nozzle and prevent coking build up.

Mixing of fuel oil and air within the aperture of the fuel oil cone plays an important role in combustion, which is influenced by the size of fuel oil droplets. In known lance injectors, however, there is little chance to improve mixing and reduce the average size of the droplets. The presence of a water layer immediately outside the fuel oil cone may even lead to less favorable spread of fuel oil. It would instead desirable to enhance the mixing ratio of fuel with air, thereby setting improved combustion conditions and reducing NOx emissions.

EP 3 078 913 A1 discloses a lance injector in accordance with the preamble of claim 1.

US 2013/125554 A1 discloses a lance injector for a gas turbine engine, comprising a supply duct arrangement, including at least a first tubular body and a second tubular body, concentrically extending along a central axis; and a terminal member coupled to downstream end of the supply duct arrangement. A fuel oil supply duct is defined inside the first tubular body and a shielding air duct is delimited by the first tubular body internally and by the second tubular body externally. The terminal member has a central fuel oil nozzle, coupled to the fuel oil supply duct, and an air outlet, coupled to the shielding air duct and surrounding the fuel oil nozzle. The fuel oil nozzle is configured to deliver a fuel oil flow in a hollow cone pattern.

Other examples of fuel oil injectors are disclosed in US 2014/123668 A1, US 2014/060071 A1, US 2006/080966 A1,

### SUMMARY OF THE INVENTION

It is an aim of the present invention to provide a fuel oil injector that allows the above limitations to be overcome or at least reduced.

According to the present invention, there is provided a lance injector according to claim 1, namely a lance injector for a gas turbine engine, the lance injector comprising:
a supply duct arrangement, including at least a first tubular body and a second tubular body, concentrically extending along a central axis; and
a terminal member coupled to downstream end of the supply duct arrangement;
wherein a fuel oil supply duct is defined inside the first tubular body and a shielding air duct is delimited by the first tubular body internally and by the second tubular body externally;
wherein the terminal member has a central fuel oil nozzle, coupled to the fuel oil supply duct, and an air outlet, coupled to the shielding air duct and surrounding the fuel oil nozzle;
wherein the fuel oil nozzle is configured to deliver a fuel oil flow in a hollow cone pattern; and
wherein the air outlet is configured to direct an shielding air flow from the shielding air duct such that the shielding air flow crosses the delivered fuel oil flow, wherein a direction of an airflow velocity at the air outlet intersects the delivered fuel oil flow pattern and preferably intersects the central axis;
characterized in that the terminal member comprises a hollow first convergent body, connected to the first tubular body and forming a fuel delivery chamber fluidly coupled to the fuel oil supply duct and to the fuel oil nozzle and wherein the fuel oil nozzle is formed in the first convergent body of the terminal member;
wherein the terminal member (18) comprises a hollow second convergent body (34), connected to the second tubular body (21), and wherein the shielding air duct (27) has a convergent section delimited by the first convergent body (33) internally and by the second convergent body (34) externally; and
wherein the air outlet has an annular convergent shape.

The first tubular body separates the fuel oil supply duct and the shielding air duct. No additional fluid layers are thus interposed between the delivered fuel oil flow and the shielding air flow, which therefore interact with each other. In turn, the interaction of the shielding air flow and of delivered fuel oil flow the has several beneficial effects on combustion. In the first place, the shielding air flow improves mixing of fuel and air and helps break the fuel oil stream into small droplets. In this manner, combustion is more efficient and oxidation is improved, thus leading to a reduction in emissions of carbon monoxide. In general, having the shielding air directed towards the centerline of the lance injector promotes interaction and gives additional degrees of freedom in shaping the resulting fuel oil cone spray angle and control of flame position. As a result, combustion dynamics and operation of the burners are remarkably improved.

Moreover, when the lance injector is not used and the burners operate on gaseous fuels, e.g. with premix burners around the lance injector, shielding air acts as a barrier and protects the fuel oil supply system from hot combustion air recirculation. Separate additional measures, such as blocking or sealing air to purge the fuel oil supply duct, are not required.

Interaction of shielding air and delivered fuel oil flow is enhanced accordingly.

The annular convergent shape of the air outlet allows to achieve the desired direction and exit angle of the shielding air and to optimize interaction with the resulting fuel oil cone spray.

According to an aspect of the invention, the terminal member comprises a hollow second convergent body, connected to the second tubular body, and wherein the shielding air duct has a convergent section delimited by the body internally and by the second convergent body externally.

In order to favor interaction, the shielding air is kept separated from the fuel oil flow only by the first convergent body, without any other fluid layers in between.

According to an aspect of the invention, the first convergent body has a frustoconical end portion and an injection end of the second convergent body has a convergent frustoconical opening and wherein the air outlet is defined by the frustoconical end portion internally and by the frustoconical opening externally.

The geometry of the frustoconical end portion and of the frustoconical opening precisely determines the features of the air outlet and the action of the shielding air flow on the cone of the delivered fuel oil flow.

According to an aspect of the invention, the first convergent body has a frustoconical intermediate portion between the first tubular body and the frustoconical end portion and wherein an annular step is defined between the frustoconical intermediate portion and the frustoconical end portion in a plane perpendicular to the central axis.

According to an aspect of the invention, the injection end of the second convergent body has a cylindrical shape and defines an air plenum around the frustoconical end portion of the first convergent body, between the convergent section of the shielding air duct and the air outlet.

The air plenum around the around the frustoconical end portion of the first convergent body allows to equalize the shielding air flow before ejection, so that the effect on the delivered fuel oil flow may be accurately determined.

According to an aspect of the invention, the supply duct arrangement comprises an outer tubular body extending coaxially around the first tubular body and the second tubular body, wherein a water supply duct is delimited by the second tubular body internally and by the outer tubular body externally, wherein the terminal member has a water outlet coupled to the water supply duct and configured to deliver a water flow around the delivered fuel oil flow.

According to an aspect of the invention, the terminal member comprises an outer convergent body extending around the second convergent body and coupled to the water supply duct.

The water flow may be used to improve control of temperature combustion and pollutant emissions, in particular NOx. As the water duct is arranged around the shielding air duct, however, spraying the water layer does not affect interaction of shielding air and fuel oil. In addition, the combined action with the shielding air flow reduces the requirements in terms of water supply.

According to an aspect of the invention, the supply duct arrangement comprises an inner tubular body, extending concentrically inside the first tubular body, wherein a fuel oil return duct is defined inside the inner tubular body and is coupled to the fuel delivery chamber and wherein the terminal member has passages coupling the fuel oil supply duct and the fuel oil return duct upstream of the fuel delivery chamber.

The use of a return line for excess fuel oil allows to optimize pressure and flow condition for delivery of fuel oil through the fuel oil nozzle.

According the present invention, there is also provided a gas turbine engine, comprising at least one fuel oil injector as defined above, a fuel oil supply system coupled to the fuel oil supply duct and an air source coupled to the shielding air duct.

According to an aspect of the invention, the gas turbine engine comprises an air control valve for each of the at least one fuel oil injector, the air control valve being configured to set air supply to the shielding air duct of the respective fuel oil injector.

The air supply to the shielding air duct and therefore the shielding air flow of the lance injectors may be thus adjusted in accordance to circumstances, e.g. to optimize or possibly restore combustion conditions, if changes intervenes during the lifetime of the gas turbine engine.

According to an aspect of the invention, the gas turbine engine comprises a first group of lance injectors, having the respective air control valves set to allow a first shielding air flow to the respective shielding air ducts, and a second group of lance injectors, having the respective air control valves set to allow a second shielding air flow to the respective shielding air ducts, the second shielding air flow being different from the first shielding air flow.

Different settings of the lance injectors in the first group and in the second group allow to establish asymmetries in combustion conditions of different burners. Such asymmetries are effective in mitigating pulsations with rotational modes.

According to an aspect of the invention, the gas turbine engine comprises a controller and a sensors configured to detect operating quantities of the gas turbine engine, wherein at least one air control valve is an adjustable control valve and the controller is configured to adjust the at least one air control valve based on a response of the sensors.

Accordingly, the shielding air flow may be dynamically adjusted during operation of the gas turbine engine by a feedback action in response to changing operating condition, for example because of ageing or varying pulsation regimes.

### BRIEF DESCRIPTION OF THE DRAWINGS

The present invention will now be described with reference to the accompanying drawings, which show a number of non-limitative embodiments thereof, in which:
- figure 1 is a simplified block diagram of a gas turbine engine;
- figure 2 is a simplified longitudinal cross section of a lance injector incorporated in the gas turbine engine of figure 1 and made in accordance with an embodiment of the present invention;
- figure 3 shows an enlarged detail of the lance injector of figure 2;
- figure 4 is a graph showing quantities relating to the lance injector of figure 2;
- figure 5 is a schematic front view of a combustor assembly of the gas turbine engine of figure 1; and
- figure 6 is a simplified longitudinal cross section of a lance injector in accordance with another embodiment of the present invention.

### DETAILED DESCRIPTION OF EXEMPLARY EMBODIMENTS

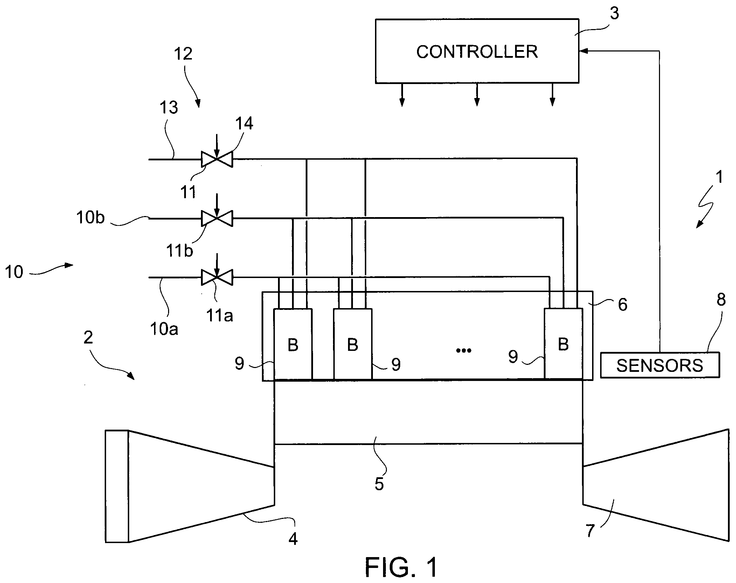

With reference to Figure 1, number 1 defines a gas-turbine plant as a whole comprising a gas turbine engine 2 and a controller 3.

The gas turbine engine 2, in turn, comprises a compressor 4, a combustor assembly 5 and an expansion section or turbine 7. Moreover, sensors 8 are arranged and configured to sense operating quantities of the gas turbine engine 2 and to send measurement signals SM to the controller 3.

The compressor 4 feeds the combustor assembly 5 with a flow of air drawn from outside.

The combustor assembly 5 comprises a plurality of burner assemblies 9, which cause the combustion inside the combustor assembly 5, of a mixture of air and fuel. An air plenum 6, coupled to the burners 9, is supplied with compressed air by the compressor 4 and defines a compressed air source for the burners 9.

The turbine 7 receives and expands a flow of burnt hot gas from the combustor assembly 5 to extract mechanical work, which is transferred to an external user, typically an electric generator, which is not shown here.

The fuel may be of several types and includes at least fuel oil. In addition to fuel oil, the gas turbine engine 2 may be structured to work also on other types of fuel, both gaseous and liquid. Fuel oil is supplied to the burners 9 by a fuel supply system 10, that comprises a fuel oil supply line 10a and a return line 10b. At least a fuel oil control valve 11a and a return control valve 11b are provided along the fuel oil supply line 10a and the return line 10b, respectively.

The gas turbine engine 1 also comprises a water supply system 12, configured to supply a controlled flow of water to the burner assemblies 9 for the purpose of reducing NOx emissions. The water supply system 12 includes at least one water supply line 13 and a water control valve 14, operable to adjust water supply to the burner assemblies 9.

The controller 3 is configured to determine set-points of the gas turbine engine 1 for desired operating conditions and to use actuators of the gas turbine engine 1, including the fuel oil control valve 11a and the return control valve 11b, so that set-points may be achieved.

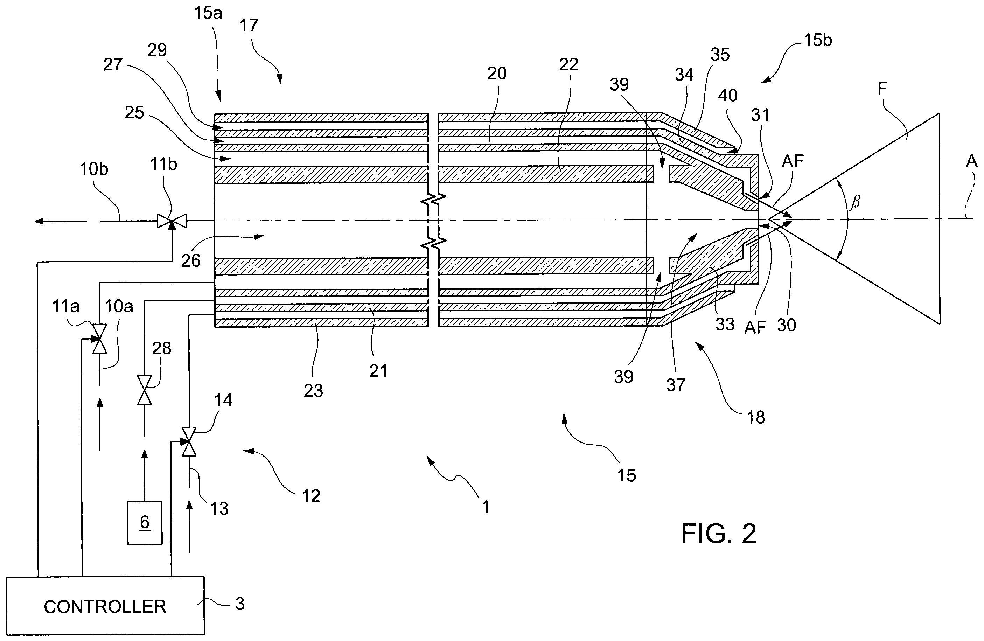

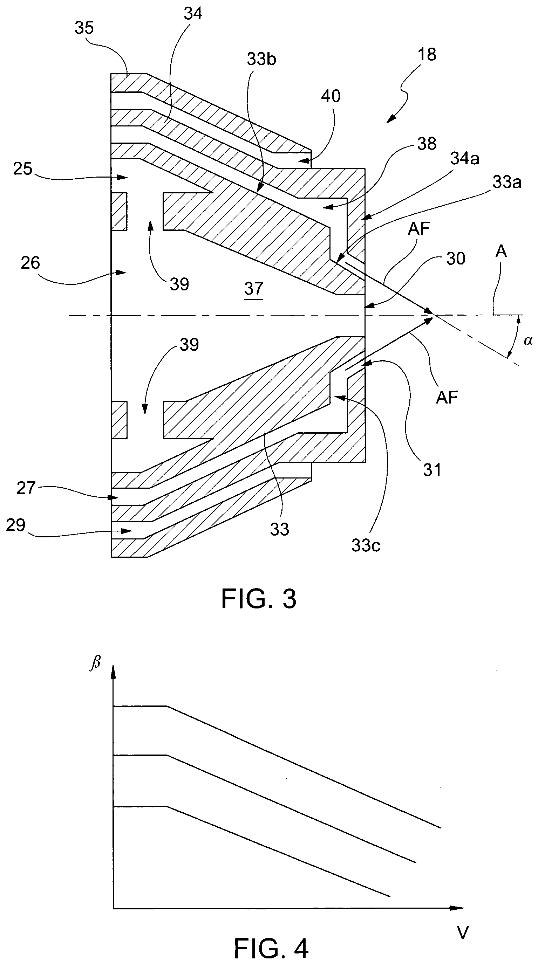

The burner 9 comprise respective fuel oil lance injectors 15, one of which is schematically shown in figures 2 and 3.

The lance injector 15 extends along a central axis A and comprises a supply duct arrangement 17 and a terminal member 18 coupled to downstream end of the supply duct arrangement 17.

The supply duct arrangement 17 comprises a first tubular body 20, a second tubular body 21, an inner tubular body 22 and an outer tubular body 23. In some embodiments not shown, however, one or both of the inner tubular body 22 and the outer tubular body 23 may not be present and the supply duct arrangement may include only the first tubular body and the second tubular body.

All the first tubular body 20, second tubular body 21, inner tubular body 22 and outer tubular body 23 extend concentrically along the central axis A.

A fuel oil supply duct 25 is defined inside the first tubular body 21. More precisely, the inner tubular body 22 extends concentrically inside the first tubular body 20, whereby the fuel oil supply duct 25 is delimited by the first tubular body 21 externally and by the inner tubular body 22 internally. A return duct 26 is defined inside the inner tubular body 22 and is coupled to the fuel oil supply duct 25 through the terminal member 18, as explained in detail later on. The return duct may not be present in embodiments not including the inner tubular body. The fuel oil supply duct 25 is furthermore coupled to the fuel oil supply line 10a through the fuel oil control valve 11a to receive a flow of fuel oil to be supplied into the combustor assembly 5. The return duct 26 is coupled to the return line 10b through the return control valve 11b to return an excess fuel oil to a reservoir (not shown). The fuel oil control valve 11a and the return control valve 11b are operated by the controller 3 to adjust a pressure and an amount of fuel oil actually delivered to support combustion.

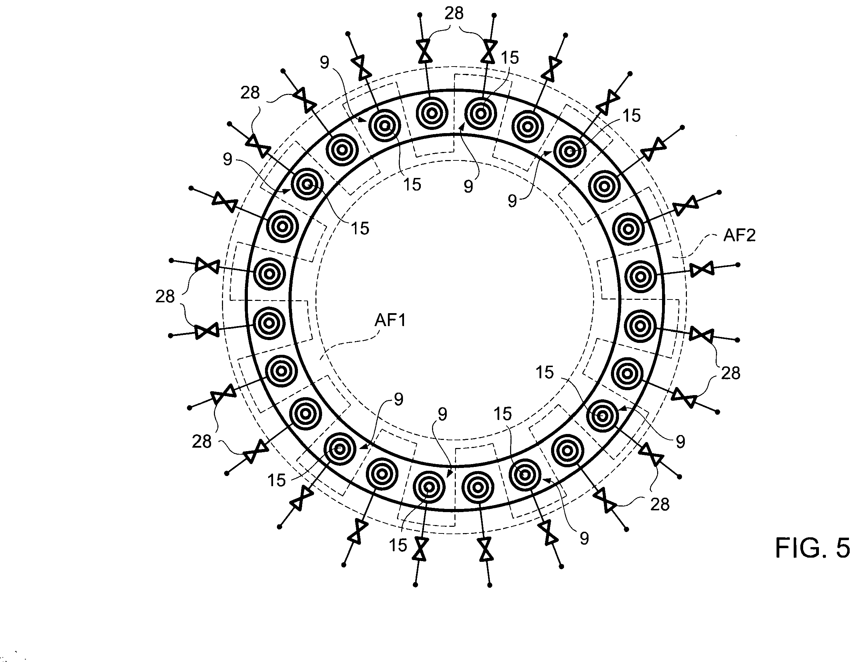

A shielding air duct 27 is delimited by the first tubular body 20 internally and by the second tubular body 21 externally. The shielding air duct 27 is coupled to the air plenum 6 through an air control valve 28 and receives an airflow to be used as shielding air. In one embodiment, the control valve 28 may be an orifice. Moreover, each lance injector 15 has a respective air control valve 28, thus meaning that either there is a dedicated air control valve 28 separately for each lance injector 15 (as in the example of figure 2, see also figure 5) or that each lance injector 15 is coupled to an air control valve 28, but air control valves 28 may be shared by several each lance injectors 15.

A water supply duct 29 is delimited by the second tubular body 21 internally and by the outer tubular body 23 externally and is coupled to the water supply system 12 via the water control valve 14.

The terminal member 18 has a central fuel oil nozzle 30, coupled to the fuel oil supply duct 25, and an air outlet 31, coupled to the shielding air duct 27 and surrounding the fuel oil nozzle 30. The fuel oil nozzle 30 is configured to deliver a fuel oil flow F in a hollow cone pattern with aperture angle β and the air outlet 31 is configured to direct a shielding air flow AF from the shielding air duct 27 such that the shielding air flow AF crosses the delivered fuel oil flow F. Specifically, direction of an airflow velocity at the air outlet intersects the hollow cone pattern of the fuel oil flow F and, in one embodiment, also intersects the central axis. To this end, the air outlet 31 has an annular convergent shape. Here and in what follows, "convergent" is to be understood with reference to a direction from a supply end 15a to an injection end 15b of the lance injector 15. This direction is also the direction of flow of fuel oil supplied trough the fuel oil supply duct 25 and a of shielding air supplied through the shielding air duct 27 (as well as of water supplied through the water supply duct 29, if present), whereas the return fuel oil flows through the return duct 26 (if present) in an opposite direction. Therefore, "convergent" here means that a radial dimension perpendicularly to or a distance from the central axis A decreases in the direction from the supply end 15a to the injection end 15b of the lance injector 15. On account of the annular convergent shape of the air outlet 31, a velocity of the shielding air flow AF at the air outlet 31 has a non-zero axial component, parallel to the central axis A, a non-zero radial component, perpendicular to the central axis A, and a zero tangential component, or at least the tangential component is lower than a velocity threshold that allows intersection with the delivered fuel oil flow F.

An exit angle α of the velocity of the shielding air flow AF at the air outlet 31, i.e. the angle formed by the velocity of the shielding air flow AF and the central axis A, is for example comprised between 5° and 80° and, preferably, between 30° and 60°. In this range, the shielding air flow AF protects from hot gas recirculation and effectively promotes mixing of air and fuel oil.

The terminal member 18 comprises a hollow first convergent body 33, a hollow second convergent body 34 and an outer convergent body 35. The first convergent body 33 is connected to the first tubular body 20 and to the inner tubular body 22 and forms a fuel delivery chamber 37 fluidly coupled to the fuel oil supply duct 25 and to the fuel oil nozzle 30. The fuel oil nozzle 30 is formed in the first convergent body 33 at the injection end 15b of the lance injector 15. The fuel delivery chamber 37 is also coupled to the fuel oil return duct 26. Passages 39 provided in the first convergent body 33 of the terminal member 18 upstream of the fuel delivery chamber 37 allow fluid coupling of the fuel oil supply duct 25 with the delivery chamber 37 and the return duct 26. Therefore, part of the fuel oil conveyed by the fuel oil supply duct 25 is delivered through the nozzle 30 and part is returned through the fuel oil return duct 26.

The second convergent body 34 is connected to the second tubular body 21. Thus, a convergent section of the shielding air duct 37 is delimited by the first convergent body 33 internally and by the second convergent body 34 externally. In one embodiment, the configuration of the air outlet 31 is defined by the first convergent body 33 and by the second convergent body 34. As shown in greater detail in figure 3, the first convergent body 33 has a frustoconical end portion 33a and an injection end 34a of the second convergent body 34 has a convergent frustoconical opening 34b surrounding the frustoconical end portion 33a of the first convergent body 33. The air outlet 31 is therefore defined by the frustoconical end portion 33a internally and by the frustoconical opening 34b externally.

The first convergent body 33 has also a frustoconical intermediate portion 33b between the first tubular body 20 and the frustoconical end portion 33a. An annular step 33c is defined between the frustoconical intermediate portion 33b and the frustoconical end portion 33a in a plane perpendicular to the central axis A. The injection end 34a of the second convergent body 34 has a cylindrical shape and defines an air plenum 38 around the frustoconical end portion 33a of the first convergent body 33, between the convergent section of the shielding air duct 27 and the air outlet 31.

The outer convergent body 35 extends around the second convergent body 34 and is coupled to the water supply duct 29. The injection end 34a of the second convergent body 34 axially projects from the outer convergent body 35 and a water outlet 40, which is coupled to the water supply duct 29, is defined therebetween. The water outlet 40 is thus configured to deliver a water flow W around the delivered fuel oil flow F. The water outlet 40 may be defined by a single annular opening around the injection end 34a of the second convergent body 34 or by a plurality of openings or holes arranged circumferentially, in accordance with design preferences.

Figure 4 shows the effect of velocity of the shielding air flow AF on the cone aperture angle β of the delivered fuel oil flow with different nozzle geometries (e.g. different exit angles α or return flow).

With reference to figure 5, in the gas turbine engine 1 the burners 9 may be divided into groups. In a first group of lance injectors 15, the respective air control valves 28 are set to allow a first shielding air flow AF1 to the respective shielding air ducts 27. In a second group of lance injectors 15, the respective air control valves 28 are set to allow a second shielding air flow AF2, different from the first shielding air flow AF1, to the respective shielding air ducts 27. Lance injectors 15 of the first group and of the second group may be alternated. The first group and the second group need not contain the same number of lance injectors. Asymmetries in combustion conditions (e.g. cone aperture angle β of the delivered fuel oil flow) help reduce pulsations with rotational modes. In the embodiment of figure 5, each lance injector is provided with a respective dedicated air control valve 28. In other embodiments, however, a single air control valve may serve several lance injectors. For example, a single air control valve may serve all the lance injectors of the first group and another single air control valve may serve all the lance injectors of the second group.

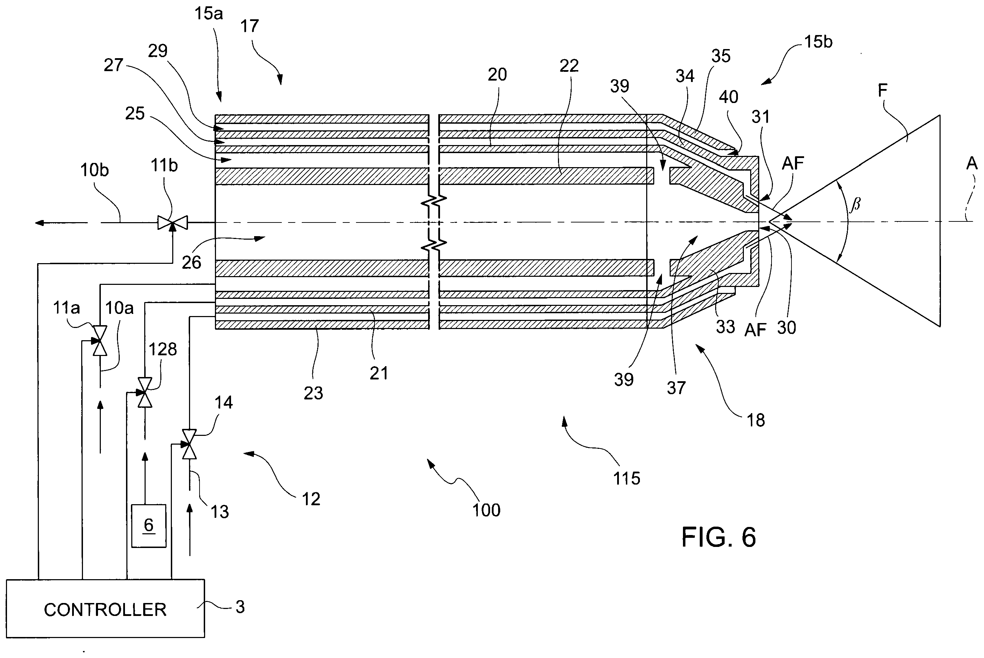

With reference to figure 6, a gas turbine engine 100, having substantially the structure of the gas turbine engine 1 of figure 1, comprises air control valves 128 of an adjustable type for supply of shielding air to the lance injectors 15. In this case, the controller 3 is configured to adjust the air control valves 128 based on a response of the sensors 8. Thus, the supply of shielding air to the lance injectors 15 and the effect thereof on the shape and mixing rate of delivered fuel oil flow F may be changed during operation of the gas turbine engine 100 in accordance with design preferences.

Finally, it is clear that modifications and variants may be made to the injector described herein without departing from the scope of the present invention, as defined in the appended claims.

## Claims

1. A lance injector for a gas turbine engine, the lance injector comprising:
a supply duct arrangement (17), including at least a first tubular body (20) and a second tubular body (21), concentrically extending along a central axis (A); and
a terminal member (18) coupled to downstream end of the supply duct arrangement (17);
wherein a fuel oil supply duct (25) is defined inside the first tubular body (20) and a shielding air duct (27) is delimited by the first tubular body (20) internally and by the second tubular body (21) externally;
wherein the terminal member (18) has a central fuel oil nozzle (30), coupled to the fuel oil supply duct (25), and an air outlet (31), coupled to the shielding air duct (27) and surrounding the fuel oil nozzle (30);
wherein the fuel oil nozzle (30) is configured to deliver a fuel oil flow (F) in a hollow cone pattern; and
wherein the air outlet (31) is configured to direct a shielding air flow from the shielding air duct (27) such that the shielding air flow crosses the delivered fuel oil flow (F), wherein a direction of an airflow velocity (V) at the air outlet (31) intersects the delivered fuel oil flow (F) and intersects the central axis (A);
**characterized in that** the terminal member (18) comprises a hollow first convergent body (33), connected to the first tubular body (20) and forming a fuel delivery chamber (37) fluidly coupled to the fuel oil supply duct (25) and to the fuel oil nozzle (30) and wherein the fuel oil nozzle (30) is formed in the first convergent body (33) of the terminal member (18);
wherein the terminal member (18) comprises a hollow second convergent body (34), connected to the second tubular body (21), and wherein the shielding air duct (27) has a convergent section delimited by the first convergent body (33) internally and by the second convergent body (34) externally;
and wherein the air outlet (31) has an annular convergent shape.

2. The lance injector according to claim 1, wherein the first convergent body (33) has a frustoconical end portion (33a) and an injection end (34a) of the second convergent body (34) has a convergent frustoconical opening (34b) and wherein the air outlet (31) is defined by the frustoconical end portion (33a) internally and by the frustoconical opening (34b) externally.

3. The lance injector according to claim 2, wherein the first convergent body (33) has a frustoconical intermediate portion (33b) between the first tubular body (20) and the frustoconical end portion (33a) and wherein an annular step (33c) is defined between the frustoconical intermediate portion (33b) and the frustoconical end portion (33a) in a plane perpendicular to the central axis (A).

4. The lance injector according to claim 3, wherein the injection end (34a) of the second convergent body (34) has a cylindrical shape and defines an air plenum (38) around the frustoconical end portion (33a) of the first convergent body (33), between the convergent section of the shielding air duct (27) and the air outlet (31).

5. The lance injector according to any one of the preceding claims, wherein the supply duct arrangement (17) comprises an outer tubular body (23) extending coaxially around the first tubular body (20) and the second tubular body (21), wherein a water supply duct (29) is delimited by the second tubular body (21) internally and by the outer tubular body (23) externally, wherein the terminal member (18) has a water outlet (40) coupled to the water supply duct (29) and configured to deliver a water flow (W) around the delivered fuel oil flow (F).

6. The lance injector according to claim 5, wherein the terminal member (18) comprises an outer convergent body (35) extending around the second convergent body (34) and coupled to the water supply duct (29).

7. The lance injector according to any one of the preceding claims, wherein the supply duct arrangement (17) comprises an inner tubular body (22), extending concentrically inside the first tubular body (20), wherein a fuel oil return duct (26) is defined inside the inner tubular body (22) and is coupled to the fuel delivery chamber (37) and wherein the terminal member (18) has passages (39) coupling the fuel oil supply duct (25) and the fuel oil return duct (26) upstream of the fuel delivery chamber (37).

8. A gas turbine engine, comprising at least one fuel oil injector (15) according to any one of the preceding claims, a fuel oil supply system (10) coupled to the fuel oil supply duct (25) and an air source (6) coupled to the shielding air duct (27).

9. The gas turbine engine according to claim 8, comprising an air control valve (28; 128) for each of the at least one fuel oil injector, the air control valve (28; 128) being configured to set air supply to the shielding air duct (27) of the respective fuel oil injector (15).

10. The gas turbine engine according to claim 9, comprising a first group of lance injectors, having the respective air control valves (28; 128) set to allow a first shielding air flow (AF1) to the respective shielding air ducts (27), and a second group of lance injectors, having the respective air control valves (28; 128) set to allow a second shielding air flow (AF2) to the respective shielding air ducts (27), the second shielding air (AF2) flow being different from the first shielding air flow (AF1).

11. The gas turbine engine according to claim 9 or 10, comprising a comprising a controller (3) and a sensors (8) configured to detect operating quantities of the gas turbine engine (100), wherein at least one air control valve (128) is an adjustable control valve and the controller is configured to adjust the at least one air control valve (128) based on a response of the sensors (8).

## Patentansprüche

1. Lanzeninjektor für eine Gasturbinenmaschine, wobei der Lanzeninjektor umfasst:
eine Zuführungskanalanordnung (17), die wenigstens einen ersten röhrenförmigen Körper (20) und einen zweiten röhrenförmigen Körper (21) umfasst, die sich konzentrisch entlang einer Mittelachse (A) erstrecken; und
ein Abschlusselement (18), das mit dem stromabwärtigen Ende der Zuführungskanalanordnung (17) gekoppelt ist;
wobei ein Brennöl-Zuführungskanal (25) innerhalb des ersten röhrenförmigen Körpers (20) definiert ist und ein Abschirmluftkanal (27) innen durch den ersten röhrenförmigen Körper (20) und außen durch den zweiten röhrenförmigen Körper (21) begrenzt wird;
wobei das Abschlusselement (18) eine zentrale Brennöldüse (30), die mit dem Brennöl-Zuführungskanal (25) gekoppelt ist, und einen Luftauslass (31) aufweist, der mit dem Abschirmluftkanal (27) gekoppelt ist und die Brennöldüse (30) umgibt;
wobei die Brennöldüse (30) dazu konfiguriert ist, einen Brennölstrom (F) in einem Hohlkegelmuster zuzuführen; und
wobei der Luftauslass (31) dazu konfiguriert ist, einen Abschirmluftstrom aus dem Abschirmluftkanal (27) so zu leiten, dass der Abschirmluftstrom den zugeführten Brennölstrom (F) kreuzt, wobei eine Richtung einer Luftstromgeschwindigkeit (V) am Luftauslass (31) den zugeführten Brennölstrom (F) schneidet und die Mittelachse (A) schneidet;
**dadurch gekennzeichnet, dass** das Abschlusselement (18) einen hohlen ersten konvergierenden Körper (33) umfasst, der mit dem ersten röhrenförmigen Körper (20) verbunden ist und eine Brennstoffzuführungskammer (37) bildet, die fluidisch mit dem Brennöl-Zuführungskanal (25) und der Brennöldüse (30) gekoppelt ist, und wobei die Brennöldüse (30) in dem ersten konvergierenden Körper (33) des Abschlusselements (18) ausgebildet ist;
wobei das Abschlusselement (18) einen hohlen zweiten konvergierenden Körper (34) aufweist, der mit dem zweiten röhrenförmigen Körper (21) verbunden ist, und wobei der Abschirmluftkanal (27) eine konvergierende Sektion aufweist, die innen durch den ersten konvergierenden Körper (33) und außen durch den zweiten konvergierenden Körper (34) begrenzt wird;
und wobei der Luftauslass (31) eine ringförmige, konvergierende Form aufweist.

2. Lanzeninjektor nach Anspruch 1, wobei der erste konvergierende Körper (33) einen kegelstumpfförmigen Endabschnitt (33a) aufweist und ein Injektionsende (34a) des zweiten konvergierenden Körpers (34) eine konvergierende kegelstumpfförmige Öffnung (34b) aufweist, und wobei der Luftauslass (31) innen durch den kegelstumpfförmigen Endabschnitt (33a) und außen durch die kegelstumpfförmige Öffnung (34b) definiert ist.

3. Lanzeninjektor nach Anspruch 2, wobei der erste konvergierende Körper (33) einen kegelstumpfförmigen Zwischenabschnitt (33b) zwischen dem ersten röhrenförmigen Körper (20) und dem kegelstumpfförmigen Endabschnitt (33a) aufweist, und wobei eine ringförmige Stufe (33c) zwischen dem kegelstumpfförmigen Zwischenabschnitt (33b) und dem kegelstumpfförmigen Endabschnitt (33a) in einer Ebene senkrecht zur Mittelachse (A) definiert ist.

4. Lanzeninjektor nach Anspruch 3, wobei das Injektionsende (34a) des zweiten konvergierenden Körpers (34) eine zylindrische Form aufweist und eine Luftkammer (38) um den kegelstumpfförmigen Endabschnitt (33a) des ersten konvergierenden Körpers (33) herum zwischen der konvergierenden Sektion des Abschirmluftkanals (27) und dem Luftauslass (31) definiert.

5. Lanzeninjektor nach einem der vorangehenden Ansprüche, wobei die Zuführungskanalanordnung (17) einen äußeren röhrenförmigen Körper (23) umfasst, der sich koaxial um den ersten röhrenförmigen Körper (20) und den zweiten röhrenförmigen Körper (21) erstreckt, wobei ein Wasserzuführungskanal (29) innen durch den zweiten röhrenförmigen Körper (21) und außen durch den äußeren röhrenförmigen Körper (23) begrenzt wird, wobei das Abschlusselement (18) einen Wasserauslass (40) aufweist, der mit dem Wasserzuführungskanal (29) gekoppelt ist und dazu konfiguriert ist, einen Wasserstrom (W) um den zugeführten Brennölstrom (F) herum zuzuführen.

6. Lanzeninjektor nach Anspruch 5, wobei das Abschlusselement (18) einen äußeren konvergierenden Körper (35) umfasst, der sich um den zweiten konvergierenden Körper (34) herum erstreckt und mit dem Wasserzuführungskanal (29) gekoppelt ist.

7. Lanzeninjektor nach einem der vorangehenden Ansprüche, wobei die Zuführungskanalanordnung (17) einen inneren röhrenförmigen Körper (22) umfasst, der sich konzentrisch innerhalb des ersten röhrenförmigen Körpers (20) erstreckt, wobei ein Brennöl-Rücklaufkanal (26) innerhalb des inneren röhrenförmigen Körpers (22) definiert ist und mit der Brennstoffzuführungskammer (37) gekoppelt ist, und wobei das Abschlusselement (18) Durchgänge (39) aufweist, die den Brennöl-Zuführungskanal (25) und den Brennöl-Rücklaufkanal (26) stromaufwärts der Brennstoffzuführungskammer (37) koppeln.

8. Gasturbinenmaschine, umfassend wenigstens einen Brennöl-Injektor (15) nach einem der vorangehenden Ansprüche, ein mit dem Brennöl-Zuführungskanal (25) gekoppeltes Brennöl-Zuführungssystem (10) und eine mit dem Abschirmluftkanal (27) gekoppelte Luftquelle (6).

9. Gasturbinenmaschine nach Anspruch 8, umfassend ein Luftsteuerventil (28; 128) für jeden des wenigstens einen Brennöl-Injektors, wobei das Luftsteuerventil (28; 128) dazu konfiguriert ist, die Luftzufuhr zu dem Abschirmluftkanal (27) des jeweiligen Brennöl-Injektors (15) einzustellen.

10. Gasturbinenmaschine nach Anspruch 9, umfassend eine erste Gruppe von Lanzeninjektoren, bei denen die jeweiligen Luftsteuerventile (28; 128) so eingestellt sind, dass sie einen ersten Abschirmluftstrom (AF1) zu den jeweiligen Abschirmluftkanälen (27) zulassen, und eine zweite Gruppe von Lanzeninjektoren, bei denen die jeweiligen Luftsteuerventile (28; 128) so eingestellt sind, dass sie einen zweiten Abschirmluftstrom (AF2) zu den jeweiligen Abschirmluftkanälen (27) zulassen, wobei der zweite Abschirmluftstrom (AF2) von dem ersten Abschirmluftstrom (AF1) verschieden ist.

11. Gasturbinenmaschine nach Anspruch 9 oder 10, umfassend eine Steuereinrichtung (3) und Sensoren (8), die dazu konfiguriert sind, Betriebsgrößen der Gasturbinenmaschine (100) zu erfassen, wobei wenigstens ein Luftsteuerventil (128) ein einstellbares Steuerventil ist und die Steuereinrichtung dazu konfiguriert ist, das wenigstens eine Luftsteuerventil (128) basierend auf einer Rückmeldung der Sensoren (8) einzustellen.

## Revendications

1. Injecteur à lance pour moteur à turbine à gaz, l'injecteur à lance comprenant:
un agencement de conduit d'alimentation (17), incluant au moins un premier corps tubulaire (20) et un deuxième corps tubulaire (21), s'étendant concentriquement le long d'un axe central (A); et
un élément terminal (18) couplé à l'extrémité aval de l'agencement de conduit d'alimentation (17);
dans lequel un conduit d'alimentation en fioul (25) est défini à l'intérieur du premier corps tubulaire (20) et un conduit d'air de protection (27) est délimité par le premier corps tubulaire (20) à l'intérieur et par le deuxième corps tubulaire (21) à l'extérieur;
dans lequel l'élément terminal (18) a une buse de fioul centrale (30), couplée au conduit d'alimentation en fioul (25), et une sortie d'air (31), couplée au conduit d'air de protection (27) et entourant la buse de fioul (30);
dans lequel la buse de fioul (30) est configurée pour distribuer un flux de fioul (F) selon un motif de cone creux; et
dans lequel la sortie d'air (31) est configurée pour diriger un flux d'air de protection depuis le conduit d'air de protection (27) de telle sorte que le flux d'air de protection croise le flux de fioul distribué (F), dans lequel une direction d'une vitesse du flux d'air (V) à la sortie d'air (31) croise le flux de fioul distribué (F) et croise l'axe central (A);
**caractérisé en ce que** l'élément terminal (18) comprend un premier corps convergent creux (33), relié au premier corps tubulaire (20) et formant une chambre de distribution de carburant (37) couplée fluidiquement au conduit d'alimentation en fioul (25) et à la buse de fuel (30) et dans lequel la buse de fuel (30) est formée dans le premier corps convergent (33) de l'élément terminal (18);
dans lequel l'élément terminal (18) comprend un deuxième corps convergent creux (34), relié au deuxième corps tubulaire (21), et dans lequel le conduit d'air de protection (27) a une section convergente délimitée par le premier corps convergent (33) à l'intérieur et par le deuxième corps convergent (34) à l'extérieur;
et dans lequel la sortie d'air (31) a une forme convergente annulaire.

2. Injecteur à lance selon la revendication 1, dans lequel le premier corps convergent (33) a une partie d'extrémité tronconique (33a) et une extrémité d'injection (34a) du deuxième corps convergent (34) a une ouverture tronconique convergente (34b) et dans lequel la sortie d'air (31) est définie par la partie d'extrémité tronconique (33a) à l'intérieur et par l'ouverture tronconique (34b) à l'extérieur.

3. Injecteur à lance selon la revendication 2, dans lequel le premier corps convergent (33) a une partie intermédiaire tronconique (33b) entre le premier corps tubulaire (20) et la partie d'extrémité tronconique (33a), et dans lequel un gradin annulaire (33c) est défini entre la partie intermédiaire tronconique (33b) et la partie d'extrémité tronconique (33a) dans un plan perpendiculaire à l'axe central (A).

4. Injecteur à lance selon la revendication 3, dans lequel l'extrémité d'injection (34a) du deuxième corps convergent (34) a une forme cylindrique et définit un plénum d'air (38) autour de la partie d'extrémité tronconique (33a) du premier corps convergent (33), entre la section convergente du conduit d'air de protection (27) et la sortie d'air (31).

5. Injecteur à lance selon l'une quelconque des revendications précédentes, dans lequel l'agencement de conduit d'alimentation (17) comprend un corps tubulaire externe (23) s'étendant coaxialement autour du premier corps tubulaire (20) et du deuxième corps tubulaire (21), dans lequel un conduit d'alimentation en eau (29) est délimité par le deuxième corps tubulaire (21) à l'intérieur et par le corps tubulaire externe (23) à l'extérieur, dans lequel l'élément terminal (18) a une sortie d'eau (40) couplée au conduit d'alimentation en eau (29) et configurée pour distribuer un flux d'eau (W) autour du flux de fioul distribué (F).

6. Injecteur à lance selon la revendication 5, dans lequel l'élément terminal (18) comprend un corps convergent externe (35) s'étendant autour du deuxième corps convergent (34) et couplé au conduit d'alimentation en eau (29).

7. Injecteur à lance selon l'une quelconque quelconque des revendications précédentes, dans lequel l'agencement de conduit d'alimentation (17) comprend un corps tubulaire interne (22), s'étendant concentriquement à l'intérieur du premier corps tubulaire (20), dans lequel un conduit de retour de fioul (26) est défini à l'intérieur du corps tubulaire interne (22) et est couplé à la chambre de distribution de carburant (37), et dans lequel l'élément terminal (18) a des passages (39) couplant le conduit d'alimentation en fioul (25) et le conduit de retour de fioul (26) en amont de la chambre de distribution de carburant (37).

8. Moteur à turbine à gaz, comprenant au moins un injecteur de fioul (15) selon l'une quelconque des revendications précédentes, un système d'alimentation en fioul (10) couplé au conduit d'alimentation en fioul (25) et une source d'air (6) couplée au conduit d'air de protection (27).

9. Moteur à turbine à gaz selon la revendication 8, comprenant une vanne de régulation d'air (28; 128) pour chacun des au moins un injecteur de fioul, la vanne de régulation d'air (28; 128) étant configurée pour réguler l'alimentation en air du conduit d'air de protection (27) de l'injecteur de fioul (15) respectif.

10. Moteur à turbine à gaz selon la revendication 9, comprenant un premier groupe d'injecteurs à lance, ayant les vannes de régulation d'air respectives (28; 128) réglées pour permettre un premier flux d'air de protection (AF1) vers les conduits d'air de protection (27) respectifs, et un deuxième groupe d'injecteurs à lance, ayant les vannes de régulation d'air (28; 128) respectives réglées pour permettre un deuxième flux d'air de protection (AF2) vers les conduits d'air de protection (27) respectifs, le deuxième flux d'air de protection (AF2) étant différent du premier flux d'air de protection (AF1).

11. Moteur à turbine à gaz selon la revendication 9 ou 10, comprenant un organe de commande (3) et des capteurs (8) configurés pour détecter les grandeurs de fonctionnement du moteur à turbine à gaz (100), dans lequel au moins une vanne de régulation d'air (128) est une vanne de régulation ajustable et l'organe de commande est configuré pour ajuster la au moins une vanne de régulation d'air (128) sur la base d'une réponse des capteurs (8).
